# DEMANDE DE BREVET EUROPEEN

(11) **EP 2 410 640 A1**
(43) Date de publication de la demande: **25.01.2012**
(21) Numéro de dépôt: 11175062.6
(22) Date de dépôt: 22.07.2011
(51) Int. Cl.: H02K 19/28, H02J 9/04, H05C 1/00

(54) **Dispositif générateur de tension pour la pêche électrique**

(30) Priorité: 23.07.2010 FR 1056025
(71) Demandeur: Gas, Alain, 33600 Pessac (FR)
(72) Inventeur: Gas, Alain, 33600 Pessac (FR)
(74) Mandataire: Fantin, Laurent

(57) **Abrégé**

L'objet de l'invention est un dispositif (10) générateur de tension pour la pêche électrique comprenant au moins une motorisation thermique (12) entraînant un ensemble générateur (14) d'une tension continue de sortie appliquée entre deux électrodes, au moins une anode et au moins une cathode, placées dans l'eau pour générer un champ électrique dans l'eau, et une interface (28) prenant la forme d'une platine de commande (30) et comprenant au moins deux connecteurs (32A,32C) pour le branchement desdites électrodes, l'ensemble générateur (14) prenant la forme d'une génératrice (50) équipée de moyens de régulation (52) de la tension continue de sortie, la génératrice (50) étant auto-excitée, l'inducteur étant alimenté par une tension d'excitation produite par l'induit de ladite génératrice, et les moyens de régulation (52) transformant la tension d'excitation issue de l'induit en une tension d'excitation régulée destinée à alimenter l'inducteur.

## Description

La présente invention est relative à un dispositif générateur de tension pour la pêche électrique.

De façon connue, la pêche électrique est pratiquée à l'aide d'un générateur de tension alimentant deux électrodes placées dans l'eau, dont une anode et une cathode.

Le champ électrique ainsi appliqué permet d'attirer ou d'anesthésier les poissons. Aussi, en modifiant la différence de potentiel entre les électrodes, il est possible d'ajuster la valeur du champ électrique appliqué dans l'eau et de contrôler les effets ressentis par les poissons.

Lesdits effets sont sensiblement liés à la proximité des électrodes, le champ étant de plus en plus fort en se rapprochant des électrodes, ainsi qu'à la taille et à l'espèce des poissons pêchés.

Ainsi, pour une valeur suffisamment importante de la tension générée et pour une taille de poisson prédéterminée, on trouve d'abord autour d'une électrode une première zone dans laquelle les poissons sont paralysés ou tétanisés par électronarcose.

Puis au delà, se situe une deuxième zone idéale d'attirance dans laquelle l'électrotaxie, ou la galvanotaxie, peut entraîner une nage forcée des poissons vers l'anode.

Ensuite, en s'éloignant davantage de l'électrode, on trouve une troisième zone de gêne susceptible de faire fuir les poissons, juste avant une dernière zone d'indifférence dans laquelle le champ électrique n'est plus assez important pour avoir un effet ressenti par les poissons.

Idéalement, et notamment dans le cas d'un relâchement du poisson après capture pour un recensement en rivière ou un examen vétérinaire en pisciculture, l'effet d'attirance est privilégié.

En effet, si le poisson ressent un effet tétanisant trop fort, il peut s'ensuivre une mort immédiate ou différée en raison des séquelles.

Ensuite, et même en connaissant l'espèce et la taille moyenne des poissons pêchés, il est impossible de prévoir ou de prérégler automatiquement la tension à générer pour attirer le poisson par électrotaxie par exemple.

En fait, la valeur et la répartition du champ électrique sont aussi fonction de la conductivité électrique de l'eau, et d'autres caractéristiques telles sa température et sa profondeur.

Le réglage de la tension générée doit donc être effectué sur le lieu d'utilisation Selon l'art antérieur, la pêche électrique est pratiquée à l'aide de générateurs à tension continue ou à impulsions unidirectionnelles, le type de tension utilisée influant sur la qualité et l'adaptabilité de ladite pêche à certains milieux aquatiques.

Ainsi, en courant continu, et si le réglage du champ généré est effectué correctement sur le lieu de pêche, les différentes zones d'effets ressentis sont bien délimitées et l'électrotaxie est plus facile à maîtriser, ce qui améliore la qualité et diminue la mortalité de ladite pêche.

Toutefois, la pêche en courant continu est très consommatrice d'énergie, ce qui nécessite de lourds moyens, autant mécaniques qu'électriques, pour la réalisation d'un dispositif de pêche autonome.

Et, étant donné que ledit courant augmente si la conductivité de l'eau augmente, la puissance nécessaire devient trop importante, et il est impossible de pêcher dans les eaux saumâtres des marais et des estuaires.

En utilisant un courant à impulsions, la répartition dans l'eau des zones d'effets est différente mais la zone d'attirance est plus étendue à tension crête égale. Aussi, les effets du champ variable sont moins bien maîtrisés, ce qui nuit à l'efficacité et à la qualité de la pêche en augmentant les effets tétanisants et les risques de mortalité, notamment dans le cas d'une eau turbide dans laquelle on ne voit pas les poissons qui sont tétanisés trop loin du pêcheur.

Cependant, pour une même puissance moyenne consommée qu'en courant continu, l'utilisation d'un courant à impulsions offre des puissances instantanées plus élevées, ce qui permet de réaliser des dispositifs de pêche moins puissants et portables, mais aussi de pêcher dans des eaux à très forte conductivité comme l'eau de mer.

Un premier dispositif rudimentaire de l'art antérieur pour la pêche électrique est constitué d'un moteur thermique accouplé à un simple alternateur dont la tension de sortie est redressée par un pont de diodes, la tension de sortie continue utilisée pour générer le champ électrique ne pouvant prendre que deux valeurs par une commutation de couplage étoile/triangle.

Ce premier dispositif n'est pas adaptable aux conditions pêche, une pêche correcte ne peut être effectuée que pour deux conductivités de l'eau, et dans les autres cas, soit les résultats sont mauvais, soit les poissons sont électrocutés.

Aussi, un deuxième dispositif de l'art antérieur se présente sous la forme d'un groupe électrogène équipé de moyens de réglage de la tension de sortie, notamment pour s'adapter à la conductivité de l'eau, et autorisant une pêche en champ continu ou à impulsions.

Lesdits moyens de réglage de la tension de sortie prennent la forme d'un transformateur associé à une électronique gérant plusieurs contacteurs de commutation, ce qui permet une variation par saut de la tension de sortie.

Bien que plus adaptable, ce deuxième dispositif ne permet pas de faire varier de façon continue la tension de sortie.

De plus, l'augmentation du nombre de sauts entraîne une augmentation du coût et de l'encombrement des moyens de réglage de la tension de sortie.

La présente invention vise à pallier les inconvénients des dispositifs de l'art antérieur et propose un dispositif générateur de tension pour la pêche électrique permettant de faire varier, à l'aide de moyens de réglage simple et peu coûteux, la tension de sortie de façon continue pour améliorer l'adaptation du champ électrique aux conditions de pêche, tels la conductivité de l'eau et la taille moyenne des poissons à pêcher.

De préférence, ledit dispositif générateur de tension selon l'invention est destiné à une pêche en champ continu, mais, pour s'adapter à des eaux à très fortes conductivités, il peut optionnellement fonctionner en générateur d'impulsions.

A cet effet, l'invention a pour objet un dispositif générateur de tension pour la pêche électrique comprenant au moins une motorisation thermique entraînant un ensemble générateur d'une tension continue de sortie appliquée entre deux électrodes, au moins une anode et au moins une cathode, placées dans l'eau pour générer un champ électrique dans l'eau, et une interface prenant la forme d'une platine de commande et comprenant au moins deux connecteurs pour le branchement desdites électrodes, l'ensemble générateur prenant la forme d'une génératrice équipée de moyens de régulation de la tension continue de sortie, ledit dispositif étant caractérisé en ce que la génératrice est auto-excitée, l'inducteur, notamment au rotor, étant alimenté par une tension d'excitation produite par l'induit, notamment au stator, de ladite génératrice, et en ce que les moyens de régulation transforment la tension d'excitation issue de l'induit en une tension d'excitation régulée destinée à alimenter l'inducteur.

La présente invention prévoit aussi un procédé de fonctionnement d'un dispositif générateur de tension pour la pêche électrique.

D'autres caractéristiques et avantages ressortiront de la description qui va suivre de l'invention, description donnée à titre d'exemple uniquement, en regard des dessins annexés sur lesquels:
- la figure 1 est une représentation en perspective d'un dispositif générateur de tension selon l'invention,
- la figure 2 est une représentation schématique de la génératrice et des moyens de régulation de la tension de sortie d'un dispositif générateur de tension selon l'invention.

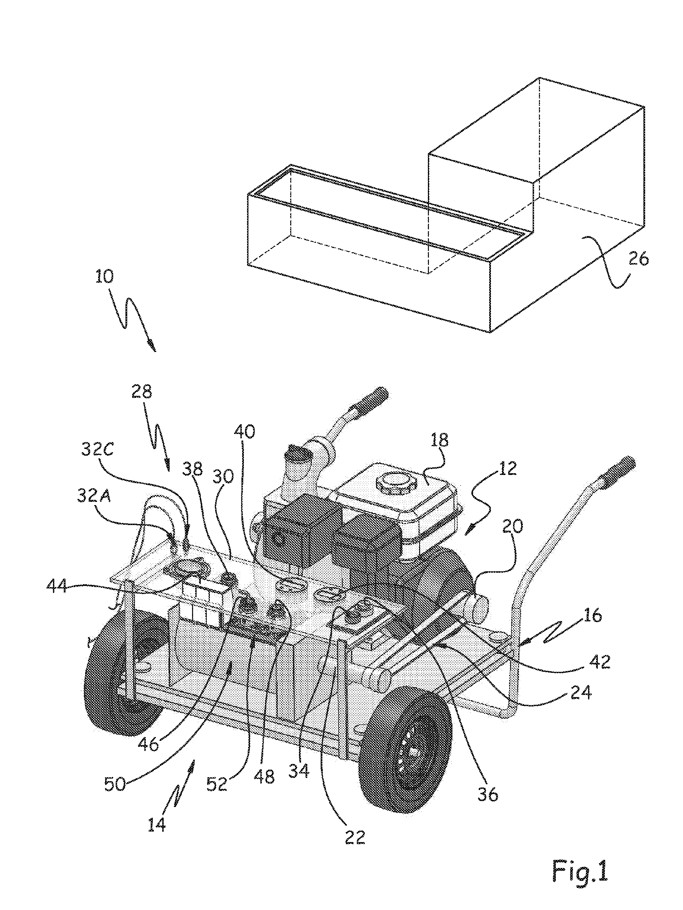

La figure 1 représente un mode de réalisation préféré d'un dispositif 10 générateur de tension pour la pêche électrique selon l'invention.

La présente invention vise la réalisation d'un dispositif 10 autonome, c'est-à-dire susceptible de fonctionner dans des lieux ne disposant pas d'un réseau d'alimentation électrique, ce qui est souvent le cas lors de la pratique de la pêche électrique.

A cet effet, le dispositif 10 selon l'invention comprend au moins une motorisation thermique 12 entraînant un ensemble générateur 14 d'une tension continue de sortie Vs utilisée pour générer un champ électrique dans l'eau.

De préférence, afin de pouvoir être déplacé facilement, ledit dispositif 10 est monté sur un châssis roulent 16, comprenant notamment deux roues à l'avant et deux poignées à l'arrière.

Ladite motorisation thermique 12 est équipée d'un réservoir 18 susceptible de conférer une autonomie suffisante de fonctionnement, et pouvant de toute manière être réapprovisionné facilement à l'aide d'un bidon ou autre.

Pour donner un ordre d'idées, ladite motorisation fournit une puissance nominale d'environ 4 kilowatts.

Afin d'entraîner l'ensemble générateur 14, l'arbre de sortie 20 de la motorisation thermique 12 est relié à l'arbre d'entrée 22 de l'ensemble générateur 14 par une transmission 24.

De préférence, cette transmission 24 prend la forme de poulies montées sur lesdits arbres et d'une courroie circulant entre lesdites poulies.

Bien entendu, un dispositif 10 équipé d'une autre transmission connue de l'homme du métier est couvert par l'invention.

Afin de protéger le dispositif 10 selon l'invention des différentes projections extérieures, et d'obtenir une protection IP25 correspondant aux normes NF EN 60335-1 et NF EN 60335-2-86, un carter de protection 26 peut venir recouvrir au moins l'ensemble générateur 14 et la transmission 24 tout en étant solidarisé au châssis roulent 16.

Afin de permettre l'utilisation de la tension continue de sortie Vs et le pilotage du fonctionnement de l'ensemble générateur 14, ledit dispositif 10 comprend au moins une interface 28 prenant la forme d'une platine de commande 30.

Ladite platine 30 comprend au moins deux connecteurs 32A,32C pour les électrodes destinées à être placées dans l'eau et entre lesquelles la tension continue de sortie Vs est appliquée, au moins un connecteur 32A pour le branchement d'un câble d'anode et au moins un connecteur 32C pour le branchement d'un câble de cathode.

De façon connue, ladite anode, non représentée, prend la forme d'un anneau déplacé dans l'eau par l'intermédiaire d'un porte-anode prenant la forme d'un manche isolé, et ladite cathode prend la forme d'une tresse ou d'un treillis ou d'une plaque placé dans l'eau.

Par la suite, ladite platine 30 comprend un interrupteur de marche 34 et un interrupteur d'arrêt 36, notamment d'urgence et réarmable.

Puis, ladite platine 30 comprend des moyens de réglage 38, notamment un potentiomètre, permettant à l'utilisateur de choisir progressivement la tension continue de sortie Vs et donc d'ajuster le champ électrique aux conditions de pêche, ainsi qu'au moins deux indicateurs visuels 40 et 42, notamment à cristaux liquides, le premier indicateur 40 affichant une mesure crête de la tension de sortie Vs, en Volts, et le deuxième indicateur 42 affichant une mesure de la puissance moyenne consommée, notamment en watts.

Avantageusement, ladite platine 30 peut aussi comporter un indicateur visuel 44 du temps effectif d'utilisation dudit dispositif 10 lors d'une session de pêche, et des connecteurs 46 et 48 pour le branchement du câble d'une télécommande filaire à distance ou d'une antenne de communication avec une télécommande sans fil.

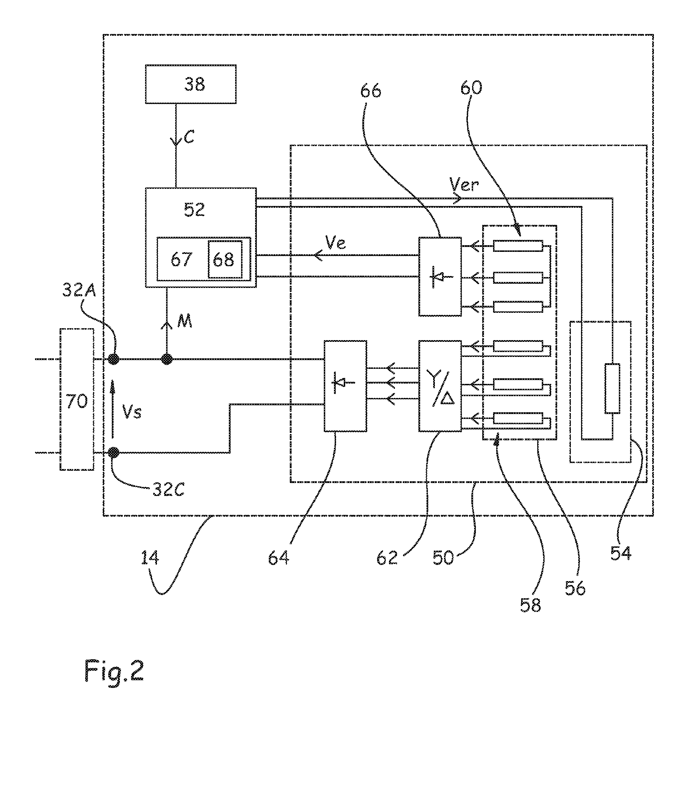

Comme illustré en figure 2, l'ensemble générateur 14 prend la forme d'une génératrice 50 équipée de moyens de régulation 52 de la tension continue de sortie Vs, lesdits moyens de régulation 52 recevant une consigne C, sous forme d'un signal électrique, des moyens de réglage 38 manipulés par l'utilisateur,

Dans un mode de réalisation préféré de invention, la génératrice 50 est auto-excitée, c'est-à-dire dont l'inducteur 54, notamment au rotor, est alimenté par une tension d'excitation Ve produite par l'induit 56 de ladite génératrice.

Plus en détails, ladite génératrice 50 comprend aussi un induit 56 composé de premiers enroulements 58 fournissant la tension de sortie Vs et de deuxièmes enroulements 60 fournissant ladite tension d'excitation Ve.

Ladite génératrice 50 étant de préférence triphasée, elle comporte aussi des moyens de couplage 62 en étoile ou en triangle des premiers enroulements 58, lesdits moyens de couplage 62 étant suivis d'un premier redresseur 64 triphasé. La tension continue de sortie Vs se Situant en sortie dudit redresseur 64, les connecteurs d'anode et de cathode 32A et 32C sont aussi placés en sortie dudit redresseur 64.

Ladite génératrice 50 comporte aussi un deuxième redresseur 66 triphasé en sortie des deuxièmes enroulements 60, ledit redresseur 66 fournissant une tension continue d'excitation Ve susceptible d'alimenter l'inducteur 54.

Enfin, les moyens de régulation 52 sont intercalés entre ledit deuxième redresseur 66 et l'inducteur 54 de manière à transformer la tension d'excitation Ve issue de l'induit 56 en une tension d'excitation régulée Ver destinée à alimenter l'inducteur 54.

La tension de sortie Vs étant susceptible de varier en fonction du régime de la motorisation thermique 12 et des variations de la charge, c'est-à-dire des variations de conductivité, de profondeur, etc, de l'eau, les moyens de régulation 52, en ajustant la valeur de la tension d'excitation régulée Ver alimentant l'inducteur 54, modifient, par l'intermédiaire de l'interaction entre l'inducteur 54 et l'induit 56, la tension de sortie Vs délivrée par l'induit 56.

Plus précisément, afin de rendre ladite tension continue de sortie Vs indépendante des variations du régime de la motorisation 12 et des variations de la charge imposée par l'eau, les moyens de régulation 52 comprennent des moyens d'asservissement 67 de la tension de sortie Vs à la consigne C transformant la valeur de la tension d'excitation Ve issue de l'induit 56 en une tension d'excitation régulée Ver adaptée pour exciter l'inducteur 54 de façon que les premiers enroulements 58 de l'induit 56 délivrent une tension de sortie Vs égalant, ou au moins se rapprochant, de la valeur de consigne C.

Encore plus précisément, selon l'invention, les moyens d'asservissement 67 comprennent au moins un dispositif 68 de modulation par largeur d'impulsions faisant varier la valeur de la tension d'excitation Ve issue de l'induit 56 vers la tension d'excitation régulée Ver adaptée pour exciter l'inducteur 54 de façon que l'induit 56 délivre une tension de sortie Vs égalant, ou au moins se rapprochant, de la valeur de consigne C.

En plus dudit asservissement, ladite modulation par largeur d'impulsions effectuée par le dispositif 68 permet aux moyens de régulation 52 de faire varier, par l'intermédiaire de l'interaction entre l'inducteur 54 et l'induit 56, de façon continue, c'est en dire sans saut, la tension continue de sortie Vs.

Cette variation continue de la tension de sortie Vs autorise un réglage optimal du champ électrique en fonction de la conductivité de l'eau, de la taille des poissons, de la profondeur et d'autres caractéristiques de l'eau, garantit une bonne adaptabilité du dispositif 10 selon l'invention aux conditions de pêche, et constitue un avantage notable en terme de qualité et d'efficacité de pêche par rapport aux dispositifs de l'art antérieur.

De plus, et avantageusement, les moyens de régulation 52 prenant la forme de simples moyens d'électronique et d'électronique de puissance, le coût de fabrication du dispositif selon l'invention est moins élevé que celui des dispositifs de l'art antérieur nécessitant des transformateurs et des contacteurs de commutation coûteux pour réaliser une variation de tension par sauts.

Pour donner un ordre d'idées, avec un moteur thermique fournissant une puissance d'environ 6,5 kilowatts et une génératrice 50 fournissant une puissance maximale de 6 kilo Voltampères à 3000 tours par minute, le dispositif 10 selon l'invention permet de faire varier la tension de sortie Vs entre 180 Volts et 650 Volts de manière continue sous une puissance maximale de 4 kilowatts, et de pêcher avec un champ électrique continu dans des eaux dont la conductivité est comprise entre 50 et 1500 micro Siemens par centimètre. Avantageusement, ladite génératrice 50 auto-excitée est une génératrice du commerce disposant de ses propres moyens de régulation de la tension de sortie en mode « compound » par transformateur, l'invention prévoyant de substituer lesdits moyens de régulation d'origine par les moyens de régulation 52 décrits ci-dessus.

Dans un deuxième mode de réalisation du dispositif 10 générateur de tension selon l'invention, notamment optimisé pour pêcher dans des eaux à fortes conductivités allant jusqu'à 5000 micro Siemens par centimètre, ledit dispositif 10 comprend, en supplément des moyens et des composants de l'ensemble générateur 14 tel que prévu par le premier mode de réalisation, des moyens de génération d'impulsions 70 permettant de délivrer une tension de sortie Vs impulsionnelle.

Lesdits moyens de génération d'impulsions 70 comprennent au moins un générateur d'impulsion commandant un transistor de puissance, notamment bipolaire à grille isolée ou IGBT, autorisant un découpage de la tension continue Vs obtenue avec l'ensemble générateur 14 précédent, et au moins un condensateur placé en sortie dudit ensemble 14 assurant la fonction de réservoir d'énergie pour assurer la forte puissance instantanée pendant l'impulsion. Avantageusement, dans ce deuxième mode de réalisation impulsionnel, la platine 30 du dispositif 10 peut comporter des connecteurs de sortie, d'anode et de cathode, dédiés au mode impulsionnel afin d'éviter toute confusion, et un commutateur de sélection du mode continu ou impulsions, les autres commandes, marche/arrêt, télécommande, restant communes aux deux modes.

Enfin, pour donner un ordre d'idées, avec un moteur thermique fournissant une puissance d'environ 6,5 kilowatts et une génératrice 50 fournissant une puissance maximale de 6 kilo Voltampères à 3000 tours par minutes, en mode impulsionnel le dispositif 10 selon l'invention permet de faire varier de manière continue la tension de sortie Vs entre 180 Volts et 400 Volts sous une puissance moyenne maximale de 4 kilowatts.

La présente invention couvre aussi un procédé de fonctionnement d'un dispositif 10 générateur de tension pour la pêche électrique.

Ainsi, le dispositif 10 comprenant au moins une motorisation thermique 12 entraînant un ensemble générateur 14 d'une tension de sortie Vs utilisée pour générer un champ électrique dans l'eau, et ledit ensemble générateur 14 comprenant au moins une génératrice auto-excitée 50 équipée de moyens de régulation 52 de la tension de sortie Vs, ledit procédé de fonctionnement prévoit que lesdits moyens de régulation 52 transforment la tension d'excitation Ve issue de l'induit 56 de la génératrice 50 en une tension d'excitation régulée Ver destinée à alimenter l'inducteur 54 de la génératrice 50 et ajustent la valeur de la tension d'excitation régulée Ver alimentant l'inducteur 54 pour modifier la tension continue de sortie Vs délivrée par l'induit 56.

Par la suite, lesdits moyens de régulation 52 recevant une consigne C, sous forme d'un signal électrique, de moyens de réglage 38 de la tension de sortie Vs manipulés par l'utilisateur, ledit procédé de fonctionnement prévoit que les moyens de régulation 52 asservissent la tension de sortie Vs à la consigne C en transformant la valeur de la tension d'excitation Ve issue de l'induit 56 en une tension d'excitation régulée Ver adaptée pour exciter l'inducteur 54 de façon que l'induit 56, et notamment les premiers enroulements 58, délivrent une tension de sortie Vs égalant, ou au moins se rapprochant, de la valeur de consigne C.

Enfin, selon l'invention, ledit procédé de fonctionnement prévoit que les moyens de régulation 52 utilisent au moins la modulation par largeur d'impulsions pour faire varier la valeur de la tension d'excitation Ve issue de l'induit 56 vers ladite tension d'excitation régulée Ver adaptée, ladite modulation par largeur d'impulsions faisant varier de façon continue la tension de sortie Vs. Optionnellement, ledit procédé de fonctionnement peut prévoir de délivrer une tension de sortie Vs impulsionnelle obtenue par un stockage d'énergie et un découpage de ladite tension de sortie, notamment à l'aide d'un condensateur et d'un dispositif à commutation commandée tel un transistor de puissance, notamment bipolaire à grille isolée ou IGBT.

Bien entendu, les modes de réalisation qui viennent d'être décrits ne sont pas limitatifs, et l'invention couvre aussi les variantes du dispositif générateur de tension pouvant être imaginées à partir de la description ci-dessus.

Ainsi, il est évident que l'invention couvre aussi une variante du dispositif 10 et de son ensemble générateur 14 dans laquelle la tension d'excitation de la génératrice n'est pas directement issue de son induit mais générée par un alternateur entraîné simultanément avec ladite génératrice par la transmission, ladite tension d'excitation issue de l'alternateur étant ensuite transformée par les moyens de régulation 52 en une tension d'excitation régulée dont la valeur est ajustée pour asservir la tension de sortie Vs à la consigne C.

De plus, et notamment en vue de réduire les coûts de fabrication, l'invention couvre aussi une variante dans laquelle la génératrice 50 est monophasée, la tension produite par une telle génératrice étant plus particulièrement adaptée pour la réalisation d'un dispositif 10 selon le deuxième mode de réalisation générant une tension à impulsions.

## Revendications

1. Dispositif (10) générateur de tension pour la pêche électrique comprenant au moins une motorisation thermique (12) entraînant un ensemble générateur (14) d'une tension continue de sortie (Vs) appliquée entre deux électrodes, au moins une anode et au moins une cathode, placées dans l'eau pour générer un champ électrique dans l'eau, et une interface (28) prenant la forme d'une platine de commande (30) et comprenant au moins deux connecteurs (32A,32C) pour le branchement desdites électrodes, l'ensemble générateur (14) prenant la forme d'une génératrice (50) équipée de moyens de régulation (52) de la tension continue de sortie (Vs), ledit dispositif (10) étant **caractérisé en ce que** la génératrice (50) est auto-excitée, l'inducteur (54), notamment au rotor, étant alimenté par une tension d'excitation (Ve) produite par l'induit (56), notamment au stator, de ladite génératrice, et **en ce que** les moyens de régulation (52) transforment la tension d'excitation (Ve) issue de l'induit (56) en une tension d'excitation régulée (Ver) destinée à alimenter l'inducteur (54).

2. Dispositif (10) générateur de tension pour la pêche électrique selon la revendication 1, **caractérisé en ce que** les moyens de régulation (52) modifient la tension de sortie (Vs) délivrée par l'induit (56), par l'intermédiaire de l'interaction entre l'inducteur (54) et l'induit (56), en ajustant la valeur de ladite tension d'excitation régulée (Ver) alimentant l'inducteur (54).

3. Dispositif (10) générateur de tension pour la pêche électrique selon la revendication 2, ladite platine (30) comprenant des moyens de réglage (38) de la tension continue de sortie (Vs), ledit dispositif (10) étant **caractérisé en ce que** lesdits moyens de régulation (52) reçoivent une consigne (C) desdits moyens de réglage (38) manipulés par l'utilisateur, et **en ce que** les moyens de régulation (52) comprennent des moyens d'asservissement (67) de la tension de sortie (Vs) à la consigne (C) transformant la valeur de la tension d'excitation (Ve) issue de l'induit (56) en une tension d'excitation régulée (Ver) adaptée pour exciter l'inducteur (54) de façon que l'induit (56) délivre une tension de sortie (Vs) égalant, ou au moins se rapprochant, de la valeur de consigne (C).

4. Dispositif (10) générateur de tension pour la pêche électrique selon la revendication 3, **caractérisé en ce que** les moyens d'asservissement (67) comprennent au moins un dispositif (68) de modulation par largeur d'impulsions faisant varier la valeur de la tension d'excitation (Ve) issue de l'induit (56) vers la tension d'excitation régulée (Ver) adaptée pour exciter l'inducteur (54) de façon que l'induit (56) délivre une tension de sortie (Vs) égalant, ou au moins se rapprochant, de la valeur de consigne (C).

5. Dispositif (10) générateur de tension pour la pêche électrique selon l'une des revendications 1 à 4, **caractérisé en ce qu'**il comprend des moyens de génération d'impulsions (70) permettant de délivrer une tension de sortie (Vs) impulsionnelle, et **en ce que** lesdits moyens de génération d'impulsions (70) comprennent au moins un générateur d'impulsion commandant un transistor de puissance et au moins un condensateur placé en sortie dudit ensemble (14).

6. Procédé de fonctionnement d'un dispositif (10) générateur de tension pour la pêche électrique, le dispositif (10) comprenant au moins une motorisation thermique (12) entraînant un ensemble générateur (14) d'une tension continue de sortie (Vs) utilisée pour générer un champ électrique dans l'eau, et ledit ensemble générateur (14) comprenant au moins une génératrice auto-excitée (50) équipée de moyens de régulation (52) de la tension de sortie (Vs), ledit procédé de fonctionnement étant **caractérisé en ce qu'**il prévoit que lesdits moyens de régulation (52) transforment la tension d'excitation (Ve) issue de l'induit (56) de la génératrice (50) en une tension d'excitation régulée (Ver) destinée à alimenter l'inducteur (54) de la génératrice (50) et modifient la tension continue de sortie (Vs) délivrée par l'induit (56) en ajustant ladite valeur de la tension d'excitation régulée (Ver).

7. Procédé de fonctionnement d'un dispositif (10) générateur de tension pour la pêche électrique selon la revendication 6, lesdits moyens de régulation (52) recevant une consigne (C) de moyens de réglage (38) de la tension de sortie (Vs) manipulés par l'utilisateur, ledit procédé de fonctionnement étant **caractérisé en ce qu'**il prévoit que les moyens de régulation (52) asservissent la tension de sortie (Vs) à la consigne (C) en transformant la valeur de la tension d'excitation (Ve) issue de l'induit (56) en une tension d'excitation régulée (Ver) adaptée pour exciter l'inducteur (54) de façon que l'induit (56) délivre une tension de sortie (Vs) égalant, ou au moins se rapprochant, de la valeur de consigne (C).

8. Procédé de fonctionnement d'un dispositif (10) générateur de tension pour la pêche électrique selon la revendication 6 ou 7, ledit procédé de fonctionnement prévoit que les moyens de régulation (52) utilisent au moins la modulation par largeur d'impulsions pour faire varier la valeur de la tension d'excitation (Ve) issue de l'induit (56) vers ladite tension d'excitation régulée Ver adaptée pour exciter l'inducteur (54) de façon que l'induit (56) délivre une tension de sortie (Vs) égalant, ou au moins se rapprochant, de la valeur de consigne (C), et en ce que ladite modulation par largeur d'impulsions fait varier de façon continue la tension de sortie (Vs).

9. Procédé de fonctionnement d'un dispositif (10) générateur de tension pour la pêche électrique selon l'une des revendications 6 à 8, ledit procédé de fonctionnement étant caractérisé en ce prévoit de délivrer une tension de sortie (Vs) impulsionnelle obtenue par un stockage d'énergie et un découpage de ladite tension de sortie.
